# EUROPEAN PATENT APPLICATION

(11) **EP 3 046 317 A1**
(43) Date of publication of application: **20.07.2016**
(21) Application number: 16151548.1
(22) Date of filing: 15.01.2016
(51) Int. Cl.: H04N 5/232

(54) **METHOD AND APPARATUS FOR CAPTURING IMAGES**

(30) Priority: 16.01.2015 KR 20150008158
(71) Applicant: Samsung Electronics Co., Ltd., Gyeonggi-do 16677 (KR)
(72) Inventor: SCHACHT, Maxime, 16677 Gyeonggi-do (KR)
(74) Representative: Gover, Richard Paul

(57) **Abstract**

A method comprising: generating, by an electronic device, a plurality of frames; combining the plurality of frames to produce a combined frame; and adjusting, by the electronic device, a size of the combined frame based on a subject depicted in the combined frame.

## Description

### TECHNICAL FIELD

The present invention relates to electronic devices in general, and more particularly, to an electronic device and method for capturing an image using a panorama function.

### BACKGROUND

Electronic devices have recently provided more and more services and functions. To increase the utilization of the electronic devices and satisfy various user demands, various applications executable in the electronic devices have been developed.

The applications include a camera function, and a user may take a self-portrait of the user or capture a background using the camera function. The applications also include a panorama function that enables the creation of a very wide-view image. The panorama function provides a wide field of vision, and if images are captured by moving a camera up, down, left and right, a full image may be reconfigured by combining frames including the partial images by means of the panorama function.

For example, if the user captures himself or herself or persons around the user using the camera function, there is a need for capturing an image without cutting any of images of persons out of the edges of a picture.

As described above, if the user wants to capture a self-portrait or persons around the user, some image of a person may be cut out of the picture. If the user wants to include all persons fully in the picture, the user should place a camera far from the scene. Accordingly, there exists a need for, when a picture is taken, detecting a subject and automatically taking a picture based on the detected subject using a panorama function, to thereby offer user convenience.

The above information is presented as background information only to assist with an understanding of the present invention. No determination has been made, and no assertion is made, as to whether any of the above might be applicable as prior art with regard to the present invention.

### SUMMARY

According to a first aspect of the present invention, a method is provided comprising: generating, by an electronic device, a plurality of frames; combining the plurality of frames to produce a combined frame; and adjusting, by the electronic device, a size of the combined frame based on at least one of subjects depicted in the combined frame.

According to a second aspect of the present invention, an electronic device is provided comprising: a camera unit; a memory; and at least one processor operatively coupled to the memory, configured to: generate a plurality of frames; combine the plurality of frames to produce a combined frame; and adjust a size of the combined frame based on at least one of subjects depicted in the combined frame.

According to a further aspect of the present invention, a computer-readable storage medium is provided that stores one or more processor executable instructions which when executed by at least one processor cause the at least one processor to perform a method comprising the steps of: generating a plurality of frames; combining the plurality of frames to produce a combined frame; and adjusting a size of the combined frame based on a location of at least one of subjects depicted in the combined frame.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 is a diagram of an example of an electronic device, according to various embodiments of the present invention ;
FIG. 2 is a flowchart of an example of a process, according to an embodiment of the present invention ;
FIG. 3 is a diagram illustrating aspects of the process of FIG. 2, according to various embodiments of the present invention ;
FIG. 4 is a flowchart of an example of a process, according to various embodiments of the present invention ;
FIG. 5 is a diagram illustrating aspects of the process of FIG. 4, according to various embodiments of the present invention ;
FIG. 6 is a flowchart of an example of a process, according to an embodiment of the present invention ;
FIG. 7A is a diagram illustrating aspects the process of FIG. 6, according to various embodiments of the present invention ; and
FIG. 7B is a diagram illustrating aspects the process of FIG. 6, according to various embodiments of the present invention.

Throughout the drawings, like reference numerals will be understood to refer to like parts, components, and structures.

### DETAILED DESCRIPTION

Various embodiments of the present invention are described with reference to the accompanying drawings. However, the scope of the present invention is not intended to be limited to the particular embodiments, and it is to be understood that the present invention covers all modifications, and/or alternatives falling within the scope of the appended claims.

The term as used in the present disclosure, 'first' or 'second' may modify the names of various components, not limiting the components. These expressions may be used to distinguish one component from another component. For example, a first component may be referred to as a second component and vice versa without departing the scope of the present disclosure. The term 'and/or' covers all possible combinations or any of a plurality of enumerated items.

The terms as used in the present disclosure are provided to describe merely specific embodiments, not intended to limit the scope of other embodiments. It is to be understood that singular forms include plural referents unless the context clearly dictates otherwise. In the present disclosure, the term 'have', 'may have', 'include', or 'may include' signifies the presence of a specific feature, number, step, operation, component, or part, or their combination, not excluding the presence or addition of one or more other features, numbers, steps, operations, components, or parts, or a combination thereof.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Unless otherwise defined, the terms and words including technical or scientific terms used in the following description and claims may have the same meanings as generally understood by those skilled in the art. The terms as generally defined in dictionaries may be interpreted as having the same or similar meanings as or to contextual meanings of related technology. Unless otherwise defined, the terms should not be interpreted as ideally or excessively formal meanings.

Preferred embodiments of the present disclosure will be described below in detail with reference to the attached drawings. A detailed description of a known function or structure will not be provided herein lest it should obscure the subject matter of the present disclosure. The terms used in the following description are defined in consideration of their functions in the present disclosure and may vary according to the intent of a user or an operator or the customs. Therefore, the present disclosure should be defined by the appended claims and their equivalents.

A term used in the present disclosure will be defined as follows.

Electronic device: an electronic device is a mobile terminal which is capable of data transmission and reception, voice call, and video call and may have at least one camera. The electronic device may be at least one of a smartphone, a tablet personal computer (PC), a three-dimensional (3D) television (TV), a smart TV, a light emitting diode (LED) TV, a liquid crystal display (LCD) TV, a tablet PC, an electronic blackboard, and the like. Besides, the electronic device may be any device capable of communicating with a peripheral device or a remote terminal. The electronic device may receive inputs simultaneously from a plurality of users.

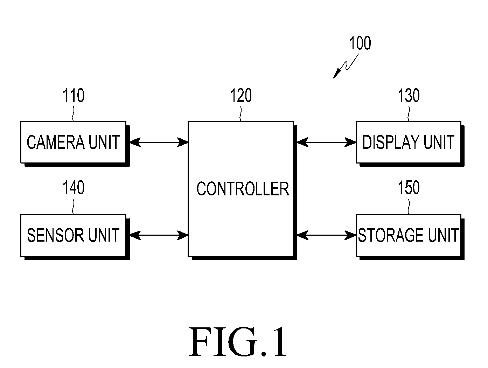

FIG. 1 is a diagram of an example of an electronic device, according to various embodiments of the present disclosure.

Referring to FIG. 1, an electronic device 100 may include a camera unit 110, a controller 120, a display unit 130, a sensor unit 140, and a storage unit 150.

The camera unit 110 may include at least one camera. According to various embodiments of the present disclosure, the camera unit 110 may include at least one of a barrel (not shown) for zooming in or zooming out the at least one camera, a motor (not shown) for controlling movement of the barrel, for zoom-in or zoom-out, and a flash (not shown) for providing a light source for capturing an image. The camera unit 110 may acquire a video or an image. The camera unit 110 may acquire a video or an image in frames and the acquired video or image may be displayed on the display unit 130 under the control of the controller 120. A user may take a self-portrait of himself or herself (that is, selfie shooting) or capture a subject, using the camera unit 110. The user may take a self-portrait of the user and other persons around the user by selfie shooting.

The controller 120 may include any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), etc. For example, the controller 120 may include a central processing unit (CPU), a read-only memory (ROM) that stores a control program for controlling the electronic device 100, and a random access memory (RAM) for storing external received signals or data or for being used as a memory area for a task executed in the electronic device 100. The CPU may include a single core, dual cores, triple cores, or quadruple cores. Further, the controller 120 may control the camera unit 110, the display unit 130, the sensor unit 140, and the storage unit 150.

The controller 120 may display an image or video acquired by the camera unit 110 on the display unit 130. With the image or video displayed on the display unit 130, the controller 120 may determine whether hovering has been recognized, as an object is approached by various input units. Further, the controller 120 may sense the height of an input unit above the electronic device 100 and a hovering input event according to the height. The hovering input event may include at least one of pressing a button formed in the input unit, tapping the input unit, moving the input unit faster than a predetermined speed, and touching an object.

The controller 120 may execute a panorama function to capture a video or an image via the camera unit 110, and detect at least one subject in the image or video. If the detected at least one subject is included in one frame, the controller 120 may control capturing of the at least one subject. Further, the controller 120 may capture at least one subject on a frame basis in correspondence with movement of the electronic device 100, generate at least one frame of the captured at least one subject, combine the at least one frame, and control the size of the combined frame based on a subject in the combined frame. For example, if a user wants to take a self-portrait of the user and persons around the user, the user may use the panorama function available in the electronic device 100 and move the electronic device 100 so that a picture of the user and other persons around the user may be taken. In this case, the controller 120 may detect at least one subject in correspondence with the movement of the electronic device 100 using the executed panorama function. The panorama function may be a function that involves capturing multiple image frames and combining the captured image frames into a continuous full image. The panorama function may be used to capture an image of a wide area that would not normally fit in the field of view of a single image. The controller 120 may detect a subject by an algorithm for detecting at least one subject. This algorithm may include a face recognition algorithm or an object recognition algorithm according to the type of a subject. Further, multiple algorithms may be used for recognizing various subjects as well as the face recognition algorithm or the object recognition algorithm, and thus various subjects may be recognized by these various algorithms.

The controller 120 may determine the number of subjects depicted in a plurality of image frames that are captured as a result of executing the panorama function. If the detected subjects are included in one frame, the controller 120 may automatically capture an image of the subjects. Once the panorama function is executed, the controller 120 may capture frames including (e.g., depicting) one or more subjects at predetermined time intervals. The controller 120 may determine the number of subjects by various recognition algorithms during the movement of the electronic device 100. The controller 120 may detect a subject adjacent to the edge of the combined frame. For example, if the user wants to capture the faces or full views of a plurality of persons that are standing nearby (e.g., adjacently) the user using the panorama function, the user may move the electronic device 100 up and down or left and right. When the electronic device 100 moves in this manner, the controller 120 may determine the number of subjects that are present in the scene by using one or more recognition algorithms. If the electronic device 100 moves in the opposite direction to a previous direction, the controller 120 may automatically capture an image at the moment when the determined number of subjects are included in one frame (e.g., when all subjects are within the field of view of the camera unit 110). For example, if the user wants to take a picture of the faces or full views of a plurality of persons around the user, upon detection of a smile of the user or a shot control motion of the user, the controller 120 may automatically take a picture.

On the other hand, if the determined number of subjects are not included in one frame, the controller 120 may combine one or more image frames that are captured while the panorama function is executed to generate a frame including the determined number of subjects. The size of a frame may be fixed, and the controller may control the size of the frame so that the determined number of subjects may be included in a single frame. For example, if there are too many subjects or users' faces, it may be difficult to fit the subjects or faces in one frame. In this case, the controller 120 may combine multiple frames including the subjects into one frame. To combine a plurality of frames into a single frame, the controller 120 may control the size of at least one of the top, bottom, left, and right sides of the frames to be combined. The controller 120 may control the size of at least one of the top, bottom, left, and right sides of a frame so as to include the detected subjects in one frame. The controller 120 may increase the size of the frame by adding padding on at least one of the top, bottom, left, and right sides of the frame. The controller 120 may control the size of the frame so that the detected subjects may be included in the frame. For example, if a part of a subject or at least one subject is not included in one frame, the controller 120 may increase the width of the frame or the size of at least one of the top, bottom, left, and right sides of the frame. The controller 120 may increase the size of the frame by a predetermined amount. The predetermined amount may be controlled variably. The controller 120 may combine frames each including at least one subject into a single frame. If the determined number of subjects are not included in one frame, the controller 120 may generate a new frame by combining frames each including at least one subject. If all of the detected subjects are not included in one frame, the controller 120 may generate a new frame by combining a plurality of frames including the subjects. The controller 120 may adjust the size of the combined frame. Also, the controller 120 may cut (that is, adjust) the combined frame based on at least one of a position of the subject in the combined frame, a maximum size which the combined frame is permitted to have, and a size of the subject in the combined frame. The controller 120 may adjust the size of the combined frame by adding padding to the combined frame based on at least one of the size of the combined frame, the capacity of the combined frame (*e.g.*, maximum size which the combined frame is permitted to have), and the size of a detected subject in the frame. Each of the predetermined pixel sizes may be controlled variably.

The display unit 130 may receive at least one touch input through the user's body (for example, a finger or a thumb) or a touchable input unit (for example, a stylus pen or an electronic pen). The display unit 130 may display at least one image or video acquired from the camera unit 110. In addition, the display 130 may recognize an input applied by a pen such as a stylus pen or an electronic pen. The display unit 130 may determine the distance between the pen and the display unit 130 based on a magnetic field, optical information, or surface acoustic waves, and may sense a touched position using charges migrated by the touch. The display unit 130 may sense any touch capable of generating static electricity and a touch applied by an input unit such as a finger or a pen. The display unit 130 may receive continuous movement of one touch that inputs a character sequence among one or more touches. The display unit 130 may transmit an analog signal corresponding to the continuous movement of the touch that inputs the character sequence to a controller 120.

The display unit 130 may be configured as, for example, a resistive type, a capacitive type, an infrared type, or an acoustic wave type.

The display unit 130 may include a plurality of sensors for, when a finger or an input unit contacts the surface of the display unit 130 or is placed apart from the display unit 130 by a predetermined distance, determining the position of the finger or the input unit. Each of the sensors may be configured in a coil structure, and a sensor layer formed with the sensors may have a predetermined pattern for each sensor and form a plurality of electrode lines. In this structure, upon generation of a touch input or a hovering input on or above the display unit 130 through a finger or an input unit, a sensing signal with a waveform change caused by capacitance between the sensor layer and the input means may be generated. Then the display unit 130 may transmit the sensing signal to the controller 120.

The sensor unit 140 may include at least one sensor for detecting a state of the electronic device 100. For example, the sensor unit 140 may include a proximity sensor for detecting whether a user is near to the electronic device 100, an illumination sensor (not shown) for detecting the amount of light around the electronic device 100, a motion sensor (not shown) for detecting a motion of the electronic device 100 (for example, rotation of the electronic device 100, acceleration or vibration applied to the electronic device 100, upward and downward movement of the electronic device 100, or sideways movement of the electronic device 100), a geomagnetic sensor for detecting a gravity direction, and an altimeter for detecting an altitude by measuring an atmospheric pressure. At least one sensor may detect a state of the electronic device 100, generate a signal corresponding to the detected state, and transmit the signal to the controller 120. A sensor may be added to or removed from the sensor unit 140 depending on the performance of the electronic device 100. The sensor unit 140 may sense a direction in which the electronic device 100 moves and whether the movement direction has been changed. For example, if the movement is made in the opposite direction, the sensor unit 140 may transmit a signal indicating the movement of the electronic device 100 in the opposite direction to the controller 120. Upon receipt of this signal, the controller 120 may determine whether detected subjects are included in one frame.

The storage unit 150 may include any suitable type of volatile or non-volatile memory, such as Random-access Memory (RAM), Read-Only Memory (ROM), Network Accessible Storage (NAS), cloud storage, a Solid-State Drive (SSD), etc. In operation, the storage unit 150 may store signals or data which are input/output in correspondence with an operation of the camera unit 110, the display unit 130, or the sensor unit 140 under the control of the controller 120. The storage unit 150 may store a control program for control of the controller 120, and applications. The storage unit 150 may store an algorithm for recognizing a subject (for example, a face) included in an image or video acquired via the camera unit 110. The storage unit 150 may store a frame obtained by combining at least one or two frames captured by the camera unit 110.

The storage unit 150 may include a non-volatile memory, a volatile memory, a hard disk drive (HDD) or a solid-state drive (SSD).

The storage unit 150 may store images required to provide a graphical user interface (GUI) for displaying a video or an image acquired via the camera unit 110, user information, text, databases or data related to a method for processing a touch input, background images (for example, a menu screen, a standby screen, and the like) or operating programs required to operate the electronic device 100, and images captured by the camera unit 110. The storage unit 150 may be a machine-readable medium (for example, a computer-readable medium). The machine-readable medium may be defined as a medium that provides data to a machine so that the machine may perform a specific function. The machine-readable medium may be a storage medium. The storage unit 150 may include a non-volatile medium and a volatile medium. All of these media should be of a type providing commands detectable by a physical device that reads commands to a machine.

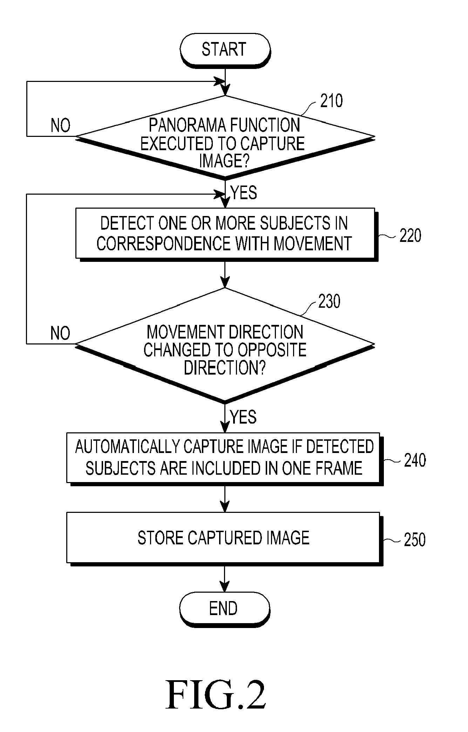

FIG. 2 is a flowchart of an example of a process, according to an embodiment of the present invention. According to the process, once the panorama function is executed in step 210, the electronic device 100 may detect at least one subject in images (e.g., frames) that are captured by the electronic device 100 as a result of executing the panorama function, in step 220. The electronic device 100 may capture an image or video by executing the panorama function. If a user moves the electronic device 100 while executing the panorama function, the electronic device 100 may capture an image or video according to the executed panorama function. The electronic device 100 may determine whether it is moving, and a direction of the movement. Further, the electronic device 100 may sense whether a movement direction is changed or whether the electronic device is moved in the opposite direction. While the electronic device 100 is moving in one direction, the panorama function may be activated. The electronic device 100 may detect at least one subject on a frame basis in correspondence with the movement. For example, if the user is moving the electronic device 100 from the left to the right in order to capture an image of the user and other persons around the user, the electronic device 100 may detect the subjects using the panorama function during the movement from the left to the right. If the electronic device 100 stops its movement or starts moving in the opposite direction (that is, from the right to the left), the electronic device 100 may deactivate the panorama function. The electronic device 100 may detect subjects in an image or video to be captured (or previewed). The subjects may include the user holding the electronic device 100, at least one person standing near the user, and/or at least one object that is situated near the user. Once the panorama function is executed, the controller 120 may capture frames depicting one or more subjects at predetermined time intervals. The controller 120 may determine the number of subjects by using various recognition algorithms during movement of the electronic device 100. The electronic device 100 may detect subjects in an image or video by a subject recognition algorithm. The electronic device 100 may determine the number of subjects detected in correspondence with the movement of the electronic device 100. Or the number of subjects may be specified by the user via user input. If the electronic device 100 moves in the opposite direction and the determined number of subjects can be included in one frame, the electronic device 100 may automatically capture an image in such a manner that the detected subjects (or all subjects) may be included in the frame.

If the electronic device 100 moves in the opposite direction in step 230 and the detected subjects are included in one frame, the electronic device 100 may automatically capture the subjects in step 240. The electronic device 100 may sense whether the direction of the movement is changed to the opposite direction. Upon sensing that the movement direction is changed to the opposite direction, the electronic device 100 may determine whether the detected subjects can be included in one frame. If the electronic device 100 determines that the detected subjects can be included in one frame, the electronic device 100 may automatically capture an image at the moment when the detected subjects are included in one frame, during movement in the opposite direction. For example, if the user wants to take portraits or full body shots of a plurality of persons that are standing adjacently the user, upon detection of a smile of the user or a shot control motion of the user, the controller 120 may automatically capture an image. The electronic device 100 may generate at least one frame of at least one subject captured in correspondence with the movement of the electronic device 100, combine the at least one frame with another frame that has been captured, and control the size of the combined frame based on a subject in the combined frame.

The electronic device 100 may store the captured image in step 250. The captured image is an image that was automatically captured at the moment when the subjects detected in step 220 are included in one frame. The captured image may be stored in the storage unit 150. Further, the electronic device 100 may store the at least one frame or the combined frame.

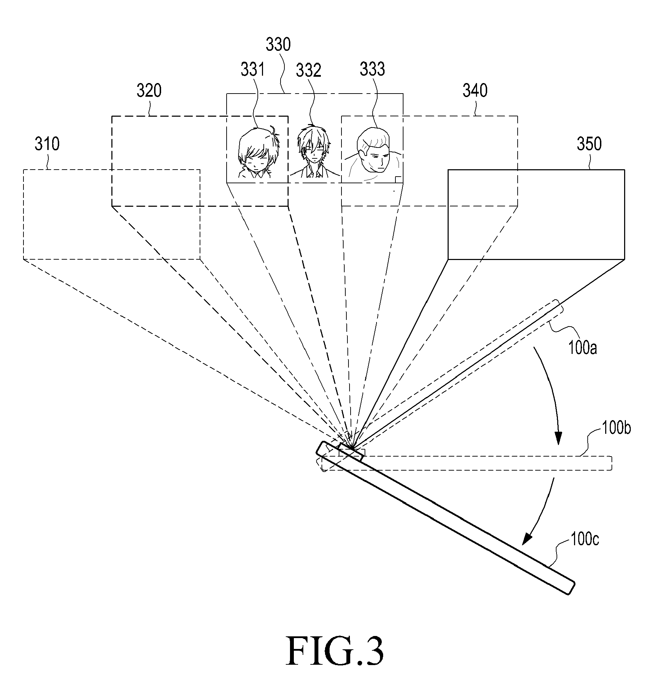

FIG. 3 is a diagram illustrating aspects of the process of FIG. 2, according to an embodiment of the present invention.

Referring to FIG. 3, the user may take a self-portrait of the user and persons standing adjacently to the user. If the user wants to capture the image of a plurality of subjects 331, 332, and 333 in this manner, the user may execute the panorama function and move the electronic device 100. The subjects may include at least one of the user, at least one person standing adjacently to the user, and at least one object situated adjacently to the user. For example, if the electronic device 100 moves in one direction (from position 100a to position 100c), the electronic device 100 may generate frames 310, 320, 330, 340, and 350 at predetermined time intervals. The first frame 310 is an initial frame that may not include a subject, after execution of the panorama function. When a predetermined time period has elapsed during the movement, the electronic device 100 may generate the second frame 320 including the first subject 331. The electronic device 100 may detect that the first subject 331 is included (*e.g*., depicted) in the second frame 320. The electronic device 100 may determine in-frame coordinates of the first subject 331 in the second frame 320. Upon expiration of a predetermined time after generation of the second frame 320 during the movement, the electronic device 100 may generate the third frame 330 including (e.g., depicting) the first, second, and third subjects 331, 332, and 333. The electronic device 100 may then detect that the first, second, and third subjects 331, 332, and 333 are included (e.g., depicted) in the third frame 330. As can be readily appreciated, the fact that the plurality of subjects can be captured in one frame may mean that the subjects are adjacent to each other. Then, the electronic device 100 may determine in-frame coordinates of the first, second, and third subjects 331, 332, and 333 in the third frame 330. Upon expiration of a predetermined time after generation of the third frame 330 during the movement, the electronic device 100 may generate the fourth frame 340 including (e.g., depicting) only the third subject 333. The electronic device 100 may then detect that the third subject 333 is included (*e.g*., depicted) in the fourth frame 340. Then, the electronic device 100 may determine in-frame coordinates of the third subject 333 in the fourth frame 340. Upon expiration of a predetermined time after generation of the fourth frame 340 during the movement, the electronic device 100 may generate the fifth frame 350. The fifth frame 350 may be the last frame that is captured as a result of the execution of the panorama function, and it may include none of the subjects. The electronic device 100 may detect subjects on a frame basis in correspondence with the movement (from position 100a to position 100c). In response to the movement being stopped or made in a changed direction, the electronic device 100 may determine the number of the different subjects that are included in the frames captured during the movement. Then, if the electronic device 100 is moving in a changed direction (that is, from position 100c to position 100a), the electronic device 100 may automatically capture an image at the moment when all of the subjects 331, 332, and 333 (or a predetermined number of them) are included in one frame. For example, the electronic device 100 may determine that all of the subjects are present in the third frame 330 and if the electronic device 100 is positioned at a view angle at which the third frame 330 is generated or if as many subjects as the number of the detected subjects are detected, the electronic device 100 may automatically capture an image. Also, if the user controls the electronic device 100 to generate one frame including all subjects (for example, at position 100b) by moving the electronic device 100 in one direction (for example, from position 100a to position 100c) and then in the opposite direction (for example, from position 100c to position 100a), the electronic device 100 may detect when all of the faces of the subjects are present in one frame and capture an image of the subjects in response. For example, if the electronic device 100 is positioned at the view angle at which the third frame is generated, upon recognition of a smile on the face of one of the subjects 331, 332, and 333, the electronic device 100 may automatically capture an image.

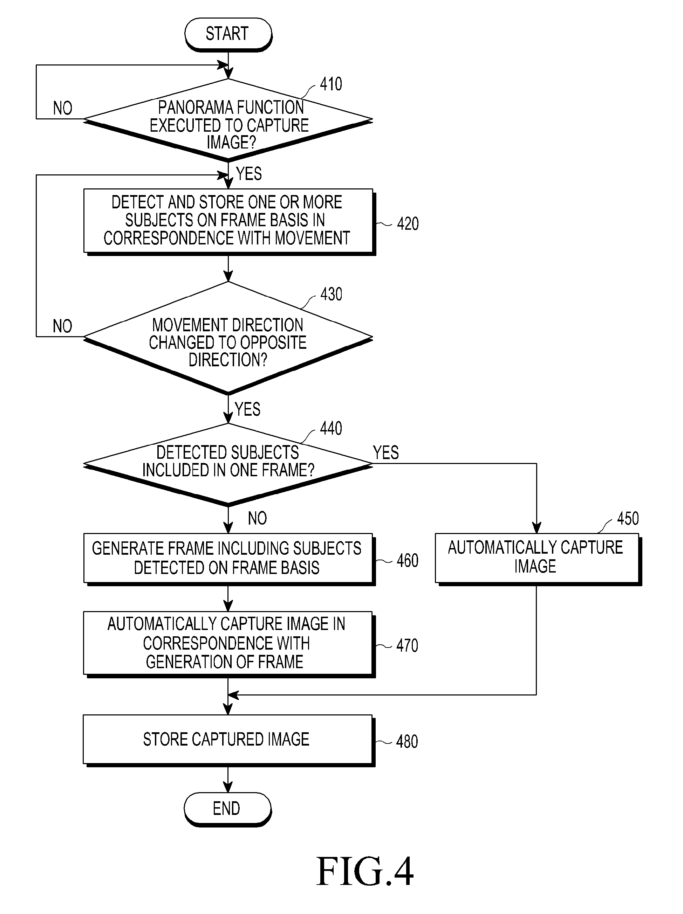

FIG. 4 is a flowchart of an example of a process, according to various embodiments of the present invention.

With reference to FIG. 4, an operation for capturing an image according to another embodiment of the present disclosure will be described below in detail.

Once the panorama function is executed to capture an image in step 410, the electronic device 100 may detect at least one subject on a frame basis in correspondence with movement of the electronic device 100 in step 420. The electronic device 100 may execute the panorama function and capture an image or video on a frame basis as a result of executing the panorama function. If a user moves the electronic device 100 for image capturing by executing the panorama function, the electronic device 100 may capture an image or video according to the executed panorama function. The panorama function may be activated while the electronic device 100 is moving in one direction, and deactivated in response to detecting that the movement has stopped or changed its direction. The electronic device 100 may detect at least one subject on a frame basis in correspondence with the movement. For example, if the user is moving the electronic device 100 from the left to the right to capture the user and persons situated near the user, the electronic device 100 may detect subjects on a frame basis using the panorama function during the movement from the left to the right. If the electronic device 100 stops its movement or changes its movement direction to the opposite direction (that is, from the right to the left), the panorama function may be deactivated. The electronic device 100 may detect subjects in an image or video to be captured (or previewed) on a frame basis. The subjects may include at least one of the user holding the electronic device 100, at least one person standing near the user, and at least one object situated near the user. Once the panorama function is executed, the controller 120 may capture image frames including (*e.g*., depicting) the subjects at predetermined time intervals. The controller 120 may determine the number of subjects by using various recognition algorithms while the electronic device 100 is moving. The electronic device 100 may detect subjects included (*e.g*., depicted) in an image or video on a frame basis by a subject recognition algorithm. The electronic device 100 may determine the number of subjects detected in correspondence with the movement of the electronic device 100. Or the number of subjects may be specified by the user (*e.g*., via user input). At the moment when as many subjects as the user-set number are detected, the panorama function may be deactivated. If the electronic device 100 moves in the opposite direction, the electronic device 100 may automatically capture an image in such a manner that the detected subjects (or all subjects) are included (*e.g*., depicted) in the same frame.

If the electronic device 100 moves in the opposite direction in step 430, the electronic device 100 may determine whether the detected subjects can be included in one frame in step 440. If the movement stops or is changed to the opposite direction, the electronic device 100 may identify a frame that includes all of the subjects detected in step 420. Further, the electronic device 100 may temporarily store a frame including at least one subject. If the electronic device 100 is positioned at a view angle at which the frame including all subjects in correspondence with the movement in the opposite direction is generated, the electronic device 100 may automatically capture an image.

If the detected subjects can be included in one frame, the electronic device 100 may automatically capture an image in step 450. The electronic device 100 may sense whether the movement is made in the opposite direction. The electronic device 100 may determine whether the subjects detected in step 420 is included in one frame. Upon sensing that the movement is made in the opposite direction, the electronic device 100 may determine whether the detected subjects may be included in one frame. If the electronic device 100 determines that the detected subjects may be included in one frame, the electronic device 100 may automatically capture an image at the moment when all of the detected subjects are included (*e.g*., depicted) in the same frame, during the movement in the opposite direction. For example, if the user wants to take facial pictures or body shots of a plurality of persons situated near the user, upon detection of a smile of the user or a shot control motion of the user, the controller 120 may automatically capture an image. The electronic device 100 may then store the captured image in step 460. The electronic device 100 may generate at least one frame depicting at least one subject captured in correspondence with the movement of the electronic device 100, combine the at least one frame with another frame, and adjust the size of the combined frame based on a subject in the combined frame.

On the other hand, if the detected subjects cannot be included in one frame, the electronic device 100 may generate a new frame that includes (*e.g*., depicts) all of the subjects in step 460. The size of a frame may be fixed. If the subjects detected in step 420 are not included in one frame of the fixed size (for example, there are too many subjects to be included in one frame), the electronic device 100 may generate a new frame in which the subjects detected in step 420 are included. The new frame may be generated by combining multiple frames that each include (*e.g*., depict) different subjects. The new frame may be larger than the frames that are being combined. The electronic device 100 may change a frame size so that all of the detected subjects may be included in the frame. The electronic device 100 may adjust (or cut) the size of the frame by inserting padding on one edge of the frame when one of the subjects is located adjacent to the edge (*e.g.,* the top, bottom, left, and right edge) of the frame.

The electronic device 100 may automatically capture an image in correspondence with the generation of the frame in step 470. The electronic device 100 may automatically capture an image at the moment when all the subjects are detected, if the movement of the electronic device 100 is made in a changed direction, or the electronic device 100 stops moving. If the view angle of the camera unit 110 of the electronic device 100 is positioned at the center of the detected subjects after generation of the new frame, the electronic device 100 may automatically capture an image. Also, the electronic device 100 may recognize the faces of the subjects and capture an image of the subjects. For example, when the detected faces are in the field of view of the camera unit 110 and the electronic device 100 senses a smile on any of the faces, the electronic device 100 may automatically capture an image. In step 480, the electronic device 100 may store the captured image. In addition, the electronic device 100 may store the generated frame.

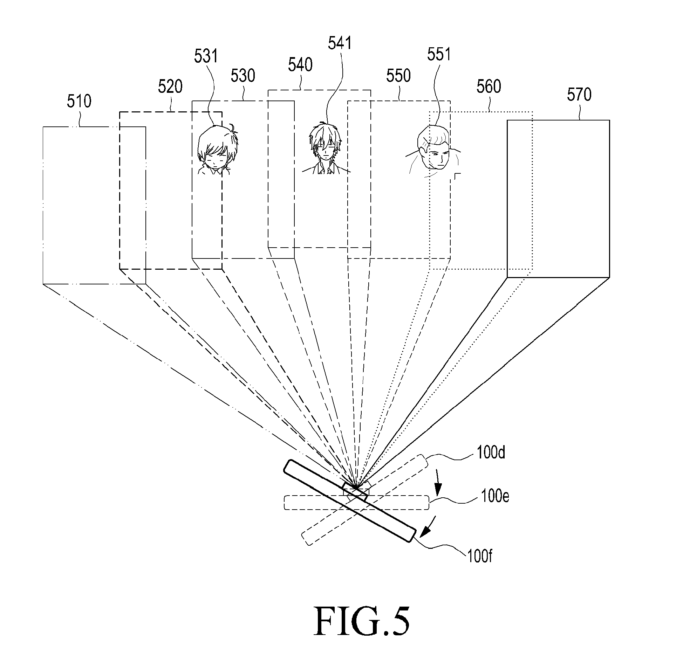

FIG. 5 is a diagram illustrating aspects of the process of FIG. 4, according to various embodiments of the present disclosure.

Referring to FIG. 5, the user may take a self-portrait of the user and persons situated nearby the user. If the user wants to capture an image of a plurality of subjects 531, 541, and 551 in this manner, the user may execute the panorama function and move the electronic device 100 to capture an image as a result of executing the panorama function. The subjects may include at least one of the user, at least one person standing nearby the user, and at least one object. For example, if the electronic device 100 is moving (from position 100d to position 100f), the electronic device 100 may generate frames 510, 520, 530, 540, 550, 560, 570 at predetermined time intervals. The first frame 510 is an initial frame that may not include a subject, after execution of the panorama function. When a predetermined time period has elapsed during the movement, the electronic device 100 may generate the second frame 520 which includes (*e.g*., depicts) a part of the first subject 531. The electronic device 100 may then detect that the part of the first subject 531 is included (*e.g*., depicted) in the second frame 520. The electronic device 100 may determine in-frame coordinates of the part of the first subject 531 in the second frame 520. Upon expiration of a predetermined time after generation of the second frame 520 during the movement, the electronic device 100 may generate the third frame 530 which includes (*e.g*., depicts) the entire first subject 531. The electronic device 100 may then detect that the first subject 531 is included (*e.g*., depicted) in the third frame 530. Upon expiration of a predetermined time after generation of the third frame 530 during the movement, the electronic device 100 may generate the fourth frame 540 which includes (*e.g*., depicts) the second subject 541. The electronic device 100 may then detect that the second subject 541 is included (*e.g*, depicted) in the fourth frame 540. Then, the electronic device 100 may determine in-frame coordinates of the second subject 541 in the fourth frame 540. Upon expiration of a predetermined time after generation of the fourth frame 540 during the movement, the electronic device 100 may generate the fifth frame 550. The electronic device 100 may then detect that a part of the third subject 551 is included (*e.g*., depicted) in the fifth frame 550. Then, the electronic device 100 may then determine in-frame coordinates of the part of the third subject 551 in the fifth frame 550. Upon expiration of a predetermined time after generation of the fifth frame 550 during the movement, the electronic device 100 may generate the sixth frame 560. The electronic device 100 may then detect that a part of the third subject 551 is included (*e.g*., depicted) in the sixth frame 560. Then, the electronic device 100 may determine in-frame coordinates of the part of the third subject 551 in the sixth frame 560. When a plurality of subjects to be captured cannot be included in one frame as described above, this may mean that the subjects are far from each other. The seventh frame 570 may be the last frame that is captured as a result of executing the panorama function, and it may include none of the subjects. The electronic device 100 may detect subjects on a frame basis in correspondence with the movement (from position 100d to position 100f). If the movement is stopped or made in a changed direction, the electronic device 100 may determine the number of the detected subjects. Then, while the electronic device 100 is moving in a changed direction (that is, from position 100f to position 100d), the electronic device 100 may automatically capture an image when all of the subjects 531, 541, and 551 fit in the same frame. By contrast, if the subjects 531, 541, and 551 cannot be included in one frame, the electronic device 100 may generate a new frame by combining frames each including at least a part of one of the subjects. For example, each of the second to sixth frames includes at least a part of a subject, and the electronic device 100 may generate a frame including all of the subjects 531, 541, and 551 by combining (*e.g*., stitching together) the second to sixth frames. The electronic device 100 may detect that each of the second to sixth frames 520 to 560 includes at least a part of a subject and generate a frame by combining the second to sixth frames 520 to 560. If the electronic device 100 is moving in a changed direction (that is, from position 100f to position 100d) and the second subject 541 is positioned at the center (or another predetermined position) in the field of view of the camera unit 110, the electronic device 100 may automatically capture an image. Also, if the user controls the field of view of the camera unit 110 so that the second subject 541 may be positioned at the center (for example, when the electronic device 100 is located at position 100e) by moving the electronic device 100 in one direction (for example, from position 100d to position 100f) and then in the opposite direction (for example, from position 100f to position 100d), the electronic device 100 may recognize the face of at least one subject and capture an image of the at least one subject. For example, if the electronic device 100 is positioned at a view angle at which the fourth frame is generated, upon recognition of a smile on the face of one of the subjects 531, 541, and 551, the electronic device 100 may automatically capture an image.

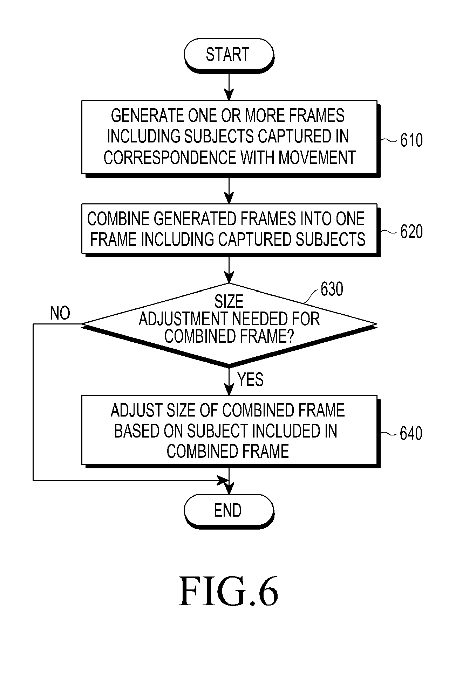

FIG. 6 is a flowchart of an example of a process, according to an embodiment of the present invention.

With reference to FIG. 6, an operation for controlling an image captured using a panorama function according to an embodiment of the present disclosure will be described below in detail.

The electronic device 100 may generate at least one frame of a captured subject in correspondence with movement of the electronic device 100 in step 610. Once the panorama function is executed to capture an image, the controller 120 may detect at least one subject in correspondence with the movement of the electronic device 100. The controller 120 may determine whether the electronic device is moving, its movement direction, and whether it is moving in a changed direction or an opposite direction. The controller 120 may generate at least one frame of a captured subject in correspondence with the movement of the electronic device. Each frame may include at least one subject or no subject. The controller 120 may detect at least one subject on a frame basis in correspondence with the movement. The controller 120 may detect that a subject is included (*e.g*., depicted) in an image or a video by using a subject recognition algorithm. The controller 120 may determine the number of subjects detected in correspondence with the movement. If the electronic device 100 is moving in the opposite direction and the determined number of subjects is included in one frame, the controller 120 may automatically capture an image that includes (*e.g*., depicts) all of the detected subjects (or all subjects). On the other hand, if the detected subjects cannot be included in one frame, the electronic device 100 may combine (*e.g*., stitch together) the frames into one frame including the detected subjects. The subjects may include at least one of the user holding the electronic device 100, at least one person situated near the user, and at least one object (for example, an item, a background animal, or the like).

The electronic device 100 may combine the generated frames into one frame that includes (*e.g*., depicts) all of the detected subjects in step 620. The controller 120 may combine frames each including a subject into one frame. To combine a plurality of frames into one frame, the controller 120 may change the respective heights and widths of the frames to be combined. Also, the controller 120 may combine a plurality of frames into one frame and control the height and width of the combined frame. The controller 120 may detect a subject adjacent to the periphery (for example, the top, bottom, left, and right edges) of the combined frame. The controller 120 may determine which one of the edges of the combined frame is closest to a subject. The controller 120 may determine the distance (for example, pixel interval) between the closest edge and the subject. Also, the controller 120 may add a predetermined amount of padding to the edge of the combined frame so that the subject does not appear situated at the frame's very edge.

If the size of the combined frame needs to be adjusted in step 630, the electronic device 100 may adjust the size of the combined frame based on a subject included in the combined frame in step 640. The controller 120 may adjust the size of the combined frame based on the position of a subject in the combined frame. More particularly, the controller 120 may control the size of the combined frame so that a predetermined area may be included based on a subject included in the combined frame. The controller 120 may add padding to an edge closest to the subject. The controller 120 may cut (or adjust) the combined frame by at least one of determining the size of the combined frame to include a predetermined first pixel size based on the position of a subject, determining the size of the combined frame to include a predetermined second pixel size according to the capacity of the combined frame, and determining the size of the combined frame to include a predetermined third pixel size based on the size of a detected subject in the frame. In other words, in some implementations, the amount of padding may be determined based on at least one the size of the combined frame based on the position of a subject, the capacity of the combined frame, and the size of a detected subject in the frame.

For instance, in some implementations, the controller 120 may determine a subject closest to one of the top, bottom, left, and right edges of the combined frame and measure the distance between the subject and the edge. Also, the controller 120 may adjust the size of the combined frame by adding a first amount of padding (for example, a predetermined number of pixel rows or columns) to the edge. The controller 120 may adjust the size of the combined frame by adding a second amount of padding (that is different from the first) according to the capacity of the combined frame. For example, if the capacity (*e.g*., maximum size which the frame is permitted to have) of the combined frame is 3 Mbytes, a predetermined amount of padding (for example, 10 pixel columns or rows) may be added as a margin. If the capacity of the combined frame is 5M bytes, a predetermined amount of padding (for example, 20 pixel columns or rows) may be added as a margin. If the capacity of the combined frame is 10M bytes, a predetermined amount of padding (for example, 30 pixel columns or rows) may be added as a margin. Thus, the size of one of the top, bottom, left, and right sides of the combined frame may be adjusted. The controller 120 may adjust the size of the combined frame by adding a predetermined different distance (for example, pixels) according to the size of a subject included in the combined frame. For example, the size of the combined frame may be adjusted by adding a predetermined amount of padding (for example, 30 pixel columns or rows) as a margin for a subject having a size (*e.g*., width) of 100 pixels, and a predetermined amount of padding (for example, 60 pixel columns or rows) as a margin for a subject having a size (*e.g*., width) of 200 pixels.

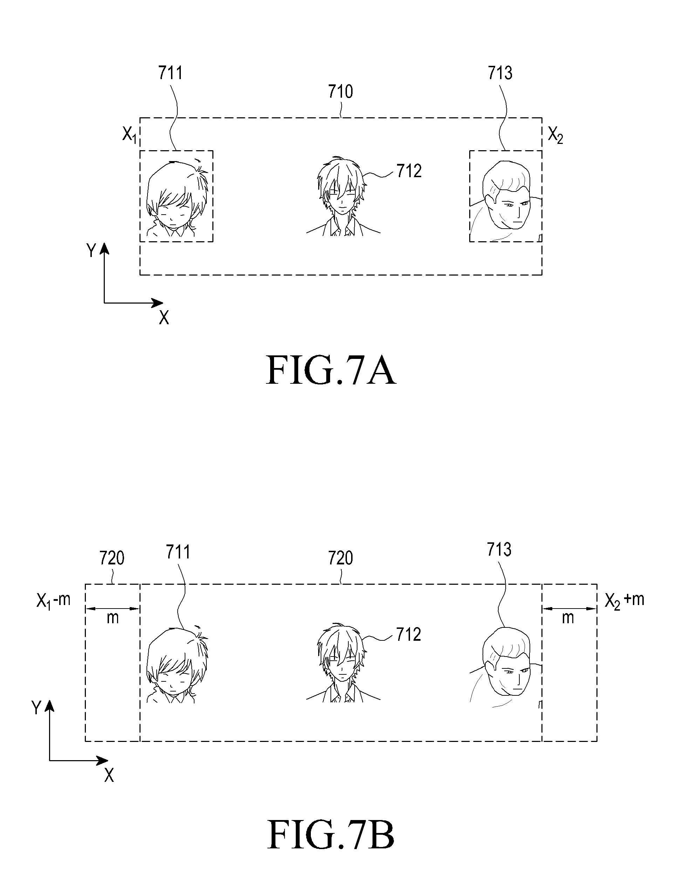

FIGS. 7A-B are diagrams illustrating aspects of the process of FIG. 6, according to various embodiments of the present invention.

Referring to FIGS. 7A and 7B, on the assumption that a user 712 takes a self-portrait of the user 712 and other persons 711 and 713 around the user 712, the X-axis size (*e.g*., width) of a frame 710 may equal the distance between coordinates X1 and X2 and may depend on the number of frames that are combined to produce the frame 710. The frame 710 may have a predetermined Y-axis size (*e.g*., height). The frame 710 may be a frame obtained by combining frames each including at least a part of a detected subject in correspondence with movement of the electronic device 100. In this case, although the second subject 712 is included (*e.g*., depicted) in the frame 710, the first coordinate X1 of the frame 710 (*e.g.,* a coordinate corresponding to the left edge of the frame) may match a coordinate of the left side of the first subject 711 and the second coordinate X2 of the frame 710 (*e.g.,* a coordinate corresponding to the right edge of the frame) may match a coordinate of the right side of the third subject 713. As described above, the left side of the first subject 711 and the right side of the third subject 713 may coincide with or adjacent to the periphery (for example, edges) of the frame 710. Also, the first subject 711 and the third subject 713 may be positioned at the outermost sides of the frame 710. In this case, the electronic device 100 may adjust the size of the frame by adding a predetermined amount of padding m on each of the left side of the first subject 711 and the right side of the third subject 713, so that the subjects 711, 712, and 713 appear properly centered in the frame (*e.g*., situated in the middle two-thirds of the frame), as illustrated in FIG. 7B. The amount of padding m may be expressed in pixels (*e.g*., pixel rows or columns) or mm. The electronic device 100 may generate a frame 720 defined by an X-axis coordinate being the sum of the predetermined amount of padding m and the first coordinate X1 of the left side of the first object 711 and another X-axis coordinate being the sum of the predetermined amount of padding m and the second coordinate X2 of the right side of the third object 713. As discussed above, the predetermined amount of padding m may be varied. While it has been described above that the width of a frame is changed in the foregoing embodiment of the present disclosure, it is to be understood that the height of a frame as well as (or instead of) the width of the frame may be changed according to various embodiments of the present disclosure.

Although in the example of FIGS. 7A-B, the size of a frame is adjusted based on the position of a subject in the frame in FIGS. 7A and 7B, it should be noted that in some implementations the size of the frame may be adjusted based on other criteria. For example, the size of a combined frame may be adjusted based on at least one of the position of a detected subject, the capacity of the combined frame (e.g., maximum size which the combined frame is permitted to have), and the size of a detected subject in the frame.

As is apparent from the foregoing description of the present disclosure, the present disclosure can capture or generate an image without cutting an image of a subject by providing an electronic device and method for capturing an image. Further, the present disclosure can automatically capture an image and automatically adjust the size of the captured image by detecting at least a part of a subject in a frame acquired by a panorama function.

While particular embodiments are described in connection with a self-portrait mode of an electronic device, in which at least one subject is the user themself, the invention is not limited to this. Alternative embodiments may comprise the use of an electronic device in which the camera points away from the user, but otherwise is as described in connection with the above embodiments.

FIGS. 1-7B are provided as an example only. At least some of the operations discussed with respect to these figures can be performed concurrently, performed in different order, and/or altogether omitted. It will be understood that the provision of the examples described herein, as well as clauses phrased as "such as," "e.g.", "including", "in some aspects," "in some implementations," and the like should not be interpreted as limiting the claimed subject matter to the specific examples.

The above-described aspects of the present disclosure can be implemented in hardware, firmware or via the execution of software or computer code that can be stored in a recording medium such as a CD-ROM, a Digital Versatile Disc (DVD), a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer.

Accordingly, it will be appreciated that embodiments of the present invention can be realized in the form of hardware, software or a combination of hardware and software. Any such software may be stored in the form of volatile or non-volatile storage such as. It will be appreciated that the storage devices and storage media are embodiments of machine-readable storage that are suitable for storing a program or programs comprising instructions that, when executed, implement embodiments of the present invention.
Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.Moreover, the embodiments disclosed in this specification are suggested for the description and understanding of technical content but do not limit the range of the present invention.

## Claims

1. A method of operating an electronic device (100), the method comprising:
generating a plurality of frames (530, 540, 550);
combining the plurality of frames (530, 540, 550) to produce a combined frame (710); and
adjusting a size of the combined frame based on at least one of subject (711, 713) depicted in the combined frame (710).

2. The method according to claim 1, further comprising detecting whether a subject (711) is located adjacent to an edge of the combined frame (710).

3. The method according to claim 2, further comprising cutting the combined frame (710) by inserting padding (720) at the edge of the combined frame (710) including the plurality of subjects in response to detecting that a subject (711, 713) is located adjacent to the edge of the combined frame (710).

4. The method according to claim 2 or claim 3, wherein the size of the combined frame (710) is adjusted based on at least one of: a position of the subject (711) in the combined frame, a maximum size which the combined frame (710) is permitted to have, and a size of the subject (711) in the combined frame.

5. The method according to any one of the preceding claims, wherein the plurality of frames (530, 540, 550) is captured by executing a panorama function, the method further comprising:
detecting a plurality of subjects (711, 712, 713) that is depicted in the plurality of frames (530, 540, 550);
detecting whether the plurality of subjects (711, 712, 713) is located within a field of view of the electronic device (100); and
automatically capturing an image in response to detecting that the plurality of subjects (711, 712, 713) is located within the field of view of the electronic device (100).

6. The method according to any one of the preceding claims, wherein adjusting the size of the combined frame (710) includes increasing the size of the combined frame (710) by a predetermined amount when the subject (711) is located adjacently to at least one of top, bottom, left, and right edges of the combined frame (710).

7. The method according to any one of the preceding claims, wherein the subject (711) includes at least one of a user holding the electronic device (100), another person situated adjacently to the user, and an object.

8. An electronic device (100) comprising:
a camera unit (110);
a memory (150); and
at least one processor (120) operatively coupled to the memory, the processor being configured to:
generate a plurality of frames (530, 540, 550);
combine the plurality of frames (530, 540, 550) to produce a combined frame (710); and
adjust a size of the combined frame (710) based on a subject (711) depicted in the combined frame (710).

9. The electronic device (100) according to claim 8, wherein the at least one processor (120) is further configured to detect whether the subject (711) is located adjacent to an edge of the combined frame (710).

10. The electronic device (100) according to claim 9, wherein the at least one processor (120) is configured to cut the combined frame (710) by inserting padding at the edge of the of the combined frame (710) in response to detecting that the subject (711) is located adjacently to the edge of the combined frame (710).

11. The electronic device (100) according to claim 9 or claim 10, wherein the at least one processor (120) is configured to adjust the size of the combined frame (710) based on at least one of: a position of the subject (711) in the combined frame (710), a maximum size which the combined frame (710) is permitted to have, and a size of the subject (711) in the combined frame (710).

12. The electronic device (100) according to any one of claims 8 to 11, **characterized in that** the at least one processor (120) is further configured to:
detect a plurality of subjects (711, 712, 713) that is depicted in the plurality of frames (530, 540, 550);
detect whether the plurality of subjects (711, 712, 713) is located within a field of view of the camera unit (110); and
automatically capture an image in response to detecting that the plurality of subjects (711, 712, 713) is located within the field of view of the camera unit (110).

13. The electronic device (100) of any one of claims 8 10 12, wherein the at least one processor (120) is configured to adjust the size of the combined frame (710) by increasing the size of the combined frame (710) by a predetermined amount if the subject (711) is located adjacently to at least one of top, bottom, left, and right edges of the combined frame (710).

14. The electronic device (100) of any one of claims 8 to 13, wherein the subject (711) includes at least one of a user holding the electronic device, another person situated adjacently to the user, and an object.

15. The electronic device (100) of any one of claims 8 to 14, wherein the at least one processor (120) is further configured to store the combined frame (710) into the memory (150).
